(19) Europäisches Patentamt
European Patent Office
Office européen des brevets

(11) EP 4 245 818 A1

(12) **EUROPEAN PATENT APPLICATION**
published in accordance with Art. 153(4) EPC

(43) Date of publication:
**20.09.2023 Bulletin 2023/38**

(21) Application number: **21894750.5**

(22) Date of filing: **19.11.2021**

(51) International Patent Classification (IPC):
***C09D 163/00*** (2006.01) ***C09D 201/00*** (2006.01)
***C09K 3/00*** (2006.01) ***C09K 3/18*** (2006.01)
***C09D 7/61*** (2018.01) ***C09D 7/63*** (2018.01)
***G02B 1/10*** (2015.01)

(52) Cooperative Patent Classification (CPC):
**C09D 7/61; C09D 7/63; C09D 163/00;**
**C09D 201/00; C09K 3/00; C09K 3/18; G02B 1/10**

(86) International application number:
**PCT/JP2021/042596**

(87) International publication number:
**WO 2022/107879 (27.05.2022 Gazette 2022/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.11.2020 JP 2020193173**
**09.02.2021 JP 2021019010**
**09.07.2021 JP 2021114329**

(71) Applicant: **Resonac Corporation**
**Tokyo 105-8518 (JP)**

(72) Inventors:
- **YAMANAKA Takahiro**
**Tokyo 105-8518 (JP)**
- **KOTAKE Tomohiko**
**Tokyo 105-8518 (JP)**
- **SHIMIZU Mari**
**Tokyo 105-8518 (JP)**
- **KIKKAWA Chisato**
**Tokyo 105-8518 (JP)**
- **FUKUTA Ryuichiro**
**Tokyo 105-8518 (JP)**
- **NAKANE Yuri**
**Tokyo 105-8518 (JP)**

(74) Representative: **Berggren Oy**
**P.O. Box 16**
**Eteläinen Rautatiekatu 10A**
**00101 Helsinki (FI)**

# (54) ANTIFOGGING AGENT, HYDROPHILIZING AGENT, AND ANTIFOGGING METHOD FOR VEHICULAR LAMP STRUCTURE

(57) An antifogging agent including silica particles, a binder compound, a silane coupling agent having a polyether group, and a liquid medium.

EP 4 245 818 A1

*Fig.1*

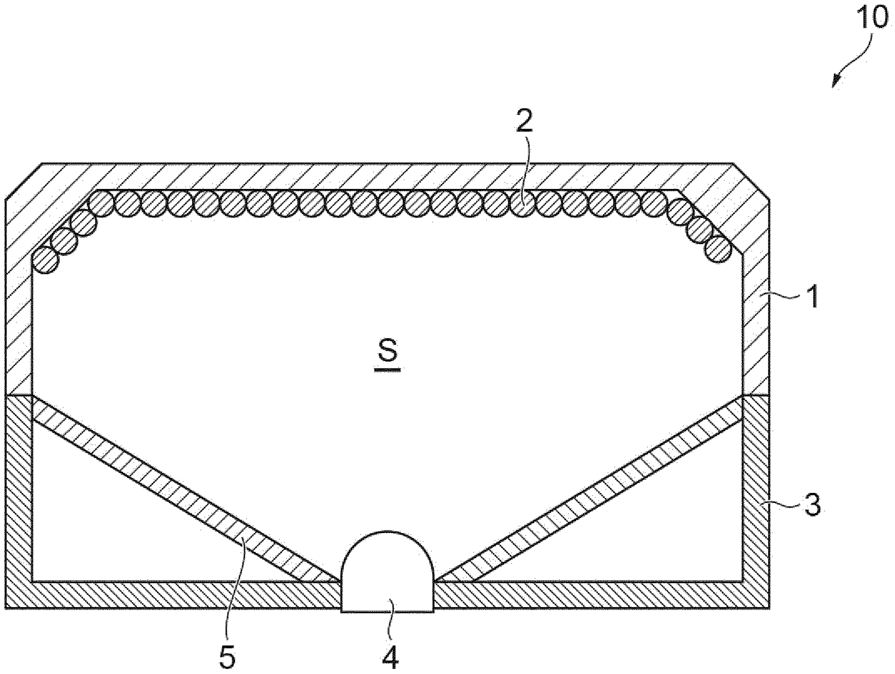

## Description

### Technical Field

The present disclosure relates to an antifogging agent, a hydrophilizing agent, and an antifogging method for a vehicular lamp structure.

### Background Art

There is known a method for applying an antifogging agent composition including a surfactant on the inside of a lamp chamber of a lamp structure for a vehicle such as an automobile, where there is a risk of occurrence of fog due to condensation (see, for example, Patent Literature 1). When water adheres to a coating film formed by the antifogging agent including a surfactant, the water instantly forms a water film due to the effect of the surfactant, and the occurrence of fog is suppressed.

### Citation List

### Patent Literature

Patent Literature 1: Japanese Unexamined Patent Publication No. 2016-027134

### Summary of Invention

### Technical Problem

However, in the above-described coating film, when water runs off from the surface of the coating film, aggregated surfactants run off along therewith, and as a result, drip marks may be generated on the inner surface of the lamp chamber. In order to form a coating film on which such drip marks are not likely to be generated, the inventors of the present invention investigated an antifogging agent including silica particles, and it was clear that there are the following problems.

A vehicular lamp structure has closed system lamp parts such as a lens, a lamp housing, a reflector, a cover, and a gasket. When the materials constituting the lamp parts, or the adhesive and the like used in the production of structure are likely to generate volatile components, the volatile components adhere to the lens and the like, causing a problem of white clouding (fogging). A fogging test for evaluating the effects of such a volatile component was performed on a polycarbonate substrate to which an antifogging agent was applied, and it was found that the antifogging properties of a coating film may be deteriorated by the volatile components from rubber materials and the like.

The present disclosure was achieved in view of the above-described circumstances, and it is an object of the present disclosure to provide an antifogging agent that can form an antifogging film whose antifogging properties are less likely to deteriorate even after a fogging test, an antifogging method for a vehicular lamp structure using the antifogging agent, and a vehicular lamp structure including an antifogging film whose antifogging properties are less likely to deteriorate even after a fogging test. It is also another object of the present disclosure to provide a hydrophilizing agent which can hydrophilize a base material surface and whose hydrophilicity is less likely to deteriorate even after a fogging test.

### Solution to Problem

An aspect of the present disclosure relates to an antifogging agent including silica particles, a binder compound, a silane coupling agent having a polyether group, and a liquid medium.

According to the above-described antifogging agent, an antifogging film whose antifogging properties are less likely to deteriorate even after a fogging test can be formed. The present inventors speculate the reason why such an effect is achieved, as follows. First, as a mechanism by which the antifogging properties of an antifogging film deteriorate after a fogging test, it is speculated that when a hydrophobic film is formed on the surface of the antifogging film by hydrophobic volatile components, it is difficult for moisture to penetrate into the inner part of the antifogging film, and water film formation is inhibited. In contrast, according to the above-described antifogging agent, as a silane coupling agent having a polyether group is incorporated, a silica particle-containing film that includes hydrophobic sites while having sufficient hydrophilicity can be formed. With regard to such a film, it is believed that volatile components adhere not only to the surface of a film but can permeate into the inner part of the film, and even moisture can sufficiently penetrate into the inner part of the film. Furthermore, the present inventors believe that when a binder compound is used in combination, a structure with which such an effect is easily obtained is formed, both the resistance to the volatile

components and the water film forming ability can be achieved at a high level, and the water film forming ability is sufficiently maintained even after a fogging test.

According to an embodiment of the antifogging agent, the binder compound may be an epoxy compound, from the viewpoint of making it easier to obtain the above-mentioned operating effects.

According to an embodiment of the antifogging agent, from the viewpoint of making it easier to obtain the above-mentioned operating effects, a content of the silane coupling agent having a polyether group may be 10 to 5000 parts by mass with respect to 100 parts by mass of the binder compound.

According to an embodiment of the antifogging agent, a content of the binder compound may be 0.1 to 1000 parts by mass with respect to 100 parts by mass of the silica particles.

According to an embodiment of the antifogging agent, the antifogging agent may further include a metal chelate.

According to an embodiment of the antifogging agent, the antifogging agent may further include at least one additive selected from the group consisting of an organic phosphoric acid ester having a branched structure and an organic sulfonic acid salt having a branched structure, from the viewpoint of making it easier to obtain an effect of achieving both the resistance to volatile components and the water film forming ability at a high level.

According to an embodiment of the antifogging agent, the antifogging agent may include a sulfosuccinic acid diester salt and/or an alkylbenzenesulfonic acid salt as the additive.

According to an embodiment of the antifogging agent, the antifogging agent may include trisethylhexyl phosphate as the additive.

Another aspect of the present disclosure relates to a hydrophilizing agent including silica particles, a binder compound, a silane coupling agent having a polyether group, and a liquid medium.

According to the above-described hydrophilizing agent, a base material surface can be hydrophilized. A hydrophilized surface is such that hydrophilicity is less likely to deteriorate even after a fogging test, and when moisture adheres thereto, a satisfactory water film can be formed.

According to an embodiment of the hydrophilizing agent, the binder compound may be an epoxy compound.

According to an embodiment of the hydrophilizing agent, a content of the silane coupling agent having a polyether group may be 10 to 5000 parts by mass with respect to 100 parts by mass of the binder compound.

According to an embodiment of the hydrophilizing agent, a content of the binder compound may be 0.1 to 1000 parts by mass with respect to 100 parts by mass of the silica particles.

According to an embodiment of the hydrophilizing agent, the hydrophilizing agent may further include a metal chelate.

According to an embodiment of the hydrophilizing agent, the hydrophilizing agent may further include at least one additive selected from the group consisting of an organic phosphoric acid ester having a branched structure and an organic sulfonic acid salt having a branched structure.

According to an embodiment of the hydrophilizing agent, the hydrophilizing agent may include a sulfosuccinic acid diester salt and/or an alkylbenzenesulfonic acid salt as the additive.

According to an embodiment of the hydrophilizing agent, the hydrophilizing agent may include trisethylhexyl phosphate as the additive.

Another aspect of the present disclosure relates to an antifogging method for a vehicular lamp structure, the antifogging method including: a step of applying the above-described antifogging agent on an inner surface of a lens included in a vehicular lamp structure to form a coating film; and a step of drying the coating film.

According to the above-described antifogging method, an antifogging film whose antifogging properties are less likely to deteriorate even after a fogging test can be formed on an inner surface of a lens.

Another aspect of the present disclosure relates to a vehicular lamp structure including an antifogging film formed from the above-described antifogging agent on an inner surface of a lens.

The above-described vehicular lamp structure can have an antifogging film whose antifogging properties are less likely to deteriorate even after a fogging test, on an inner surface of a lens.

## Advantageous Effects of Invention

According to the present disclosure, there can be provided an antifogging agent capable of forming an antifogging film whose antifogging properties are less likely to deteriorate even after a fogging test, an antifogging method of a vehicular lamp structure using the antifogging agent, and a vehicular lamp structure including an antifogging film whose antifogging properties are less likely to deteriorate even after a fogging test. The present disclosure can also provide a hydrophilizing agent which can hydrophilize a base material surface and whose hydrophilicity is less likely to deteriorate even after a fogging test.

## Brief Description of Drawings

FIG. 1 is a diagram schematically showing a vehicular lamp structure.
FIG. 2 is a schematic diagram for explaining a fogging test.

## Description of Embodiments

Suitable embodiments of the present disclosure will be described in detail below, with reference to the drawings as necessary. However, the present disclosure is not intended to be limited to the following embodiments. Incidentally, unless particularly stated otherwise, the materials listed as examples below may be used singly, or two or more kinds thereof may be used in combination. The content of each component in the composition means, when a plurality of substances corresponding to each component in the composition are present, the total amount of the plurality of substances present in the composition, unless particularly stated otherwise. A numerical value range expressed using the term "to" represents a range including the numerical values described before and after the term "to" as the minimum value and the maximum value, respectively. With regard to a numerical value range described stepwise in the present specification, the upper limit value or lower limit value in a numerical value range of a certain stage may be replaced with the upper limit value or lower limit value of a numerical value range of another stage. With regard to a numerical value range described in the present specification, the upper limit value or lower limit value of the numerical value range may be replaced with a value shown in the

Examples.

<Antifogging agent>

An antifogging agent of the present embodiment includes silica particles, a binder compound, a silane coupling agent having a polyether group, and a liquid medium. According to the antifogging agent of the present embodiment, an antifogging film whose antifogging properties are less likely to deteriorate even after a fogging test (hereinafter, may be referred to as "fogging resistance"), can be formed.

(Silica particles)

Regarding the particle size of the silica particles, the average particle size measured by a dynamic light scattering method may be 3 to 700 nm or may be 5 to 500 nm.
The content of the silica particles may be 0.1% to 20% by mass or may be 0.1% to 10% by mass, based on the total amount of the antifogging agent.
The shape of the silica particles is not particularly limited, and examples include a rosary shape (pearl necklace shape), a chain shape, a spherical shape, a cocoon type, an association type, and a confetti type. Among these, from the viewpoints of moisture resistance and water resistance, a rosary shape (pearl necklace shape) and a chain shape are preferred.
The silica particles may contain a metal oxide other than silicon dioxide. The type of the metal oxide is not particularly limited, however, for example, alumina may be mentioned. Regarding such silica particles, colloidal silica in which aluminosilicate in an amount sufficient for stabilization of silica sol is firmly formed on the surface of colloidal silica, may be mentioned.
The silica particles may be colloidal silica. Regarding the colloidal silica, one having an average particle size (secondary particle size) of 1 to 1000 nm can be used. When the average particle size is 1 nm or more, the particles are less likely to aggregate in the antifogging agent, and therefore, the particles are more likely to adhere to the base material. On the other hand, when the average particle size is 1000 nm or less, the specific surface area of the particles increases, and the particles are more likely to adhere to the base material. From this viewpoint, the average particle size of the colloidal silica may be 3 to 700 nm and may be 5 to 500 nm.
The average particle size can be measured by, for example, the following procedure. First, about 100 μL (L represents liter, hereinafter, the same) of a colloidal silica dispersion liquid is weighed and diluted with ion-exchanged water so as to adjust the content of colloidal silica to be approximately 0.05% by mass (a content at which the transmittance (H) is 60% to 70% at the time of measurement) to obtain a diluted liquid. Then, the diluted liquid is charged into a sample tank of a laser diffraction type particle size distribution meter (manufactured by HORIBA, Ltd., trade name: LA-920, refractive index: 1.93, light source: He-Ne laser, absorption 0), and the average particle size can be measured.
The number of silanol groups per 1 g of the colloidal silica may be $10\times10^{18}$ to $1000\times10^{18}$ groups/g, may be

$50\times10^{18}$ to $800\times10^{18}$ groups/g, or may be $100\times10^{18}$ to $700\times10^{18}$ groups/g. When the number of silanol groups per 1 g of the colloidal silica is $10\times10^{18}$ groups/g or more, the number of chemical bonding points with functional groups of the base material increases, and therefore, the adhesiveness to the base material is likely to be improved. On the other hand, when the number of silanol groups is $1000\times10^{18}$ groups/g or less, a sudden polycondensation reaction between colloidal silica molecules during the preparation of an antifogging liquid can be suppressed, and reduction of the number of chemical bonding points with functional groups of the base material can be suppressed.

The number of silanol groups ($\rho$ [groups/g]) in the present embodiment can be measured and calculated by the following titration.

[1] First, 15 g of colloidal silica is weighed in a container whose mass has been measured (X [g]) and is dispersed in an appropriate amount of water (100 ml or less). When the colloidal silica is in a state of a dispersion liquid in which the colloidal silica is dispersed in a medium such as water, the dispersion liquid is weighed in a container such that the amount of the colloidal silica is 15 g.

[2] Next, the pH is adjusted to 3.0 to 3.5 with 0.1 mol/L hydrochloric acid, the mass (Y [g]) at this time is measured, and the total mass of the liquid (Y - X [g]) is obtained.

[3] The liquid in an amount corresponding to 1/10 of the mass obtained in the above-described item [2] ((Y - X)/10 [g]) is weighed in another container. The colloidal silica (A [g]) included in the liquid in this stage is 1.5 g.

[4] 30 g of sodium chloride is added thereto, and ultrapure water is further added to adjust the total amount to 150 g. The pH of this liquid is adjusted to 4.0 with a 0.1 mol/L sodium hydroxide solution, and the resultant is used as a sample for titration.

[5] To this sample for titration, 0.1 mol/L sodium hydroxide is added dropwise until the pH reaches 9.0, and the amount of sodium hydroxide (B [mol]) required to change the pH from 4.0 to 9.0 is obtained.

[6] The number of silanol groups carried by the colloidal silica is calculated by the following Formula (1).

$$\rho = B \cdot N_A/A \cdot S_{BET} \quad \ldots (1)$$

(wherein in Formula (1), $N_A$ [groups/mol] represents Avogadro's number; and $S_{BET}$ [$m^2$/g] represents the BET specific surface area of the colloidal silica.)

The above-mentioned BET specific surface area $S_{BET}$ is obtained according to the BET specific surface area method. Regarding a specific measurement method, for example, for a sample obtained by placing colloidal silica in a dryer, drying the colloidal silica at 150°C, subsequently introducing the resultant into a measurement cell, and performing vacuum degassing at 120°C for 60 minutes, the $S_{BET}$ can be obtained by a one-point method or a multipoint method, both involving adsorption of nitrogen gas using a BET specific surface area measuring apparatus. More specifically, first, colloidal silica that has been dried at 150°C is finely crushed in a mortar (porcelain, 100 ml) and introduced into a measurement cell as a sample for measurement, and the BET specific surface area $S_{BET}$ of this sample is measured by using a BET specific surface area measuring apparatus (product name NOVE-1200) manufactured by Yuasa Ionics Co., Ltd.

The degree of association of the colloidal silica may be, for example, 5.0 or less, may be 4.0 or less, may be 3.0 or less, may be 2.5 or less, or may be 2.0 or less. When the degree of association is in such a range, the specific surface area of the colloidal silica is appropriately increased, and therefore, the adhesiveness to the base material is improved. Furthermore, a colloidal silica having such a degree of association is easily available. The degree of association may be 1.0 or greater, may be 1.3 or greater, or may be 1.5 or greater. When the degree of association is in such a range, the specific surface area of the colloidal silica is moderately small, and thereby aggregation of the colloidal silica during preparation of the antifogging agent can be suppressed.

Here, according to the present specification, the degree of association of the colloidal silica in the colloidal silica dispersion liquid means the ratio between the average particle size of secondary particles of the colloidal silica in the dispersion liquid and the biaxial average primary particle size of the colloidal silica (average particle size of secondary particles/biaxial average primary particle size). The average primary particle size can be measured by using, for example, a known transmission electron microscope (for example, trade name: H-7100FA manufactured by Hitachi High-Tech Corporation). For example, an image of particles is captured by using an electron microscope, the biaxial average primary particle size is calculated for a predetermined number of any particles, and the average value of these is obtained. In the case of colloidal silica, since the particle size is generally uniform, the number of particles to be measured may be, for example, about 20 particles. Incidentally, the average particle size of secondary particles refers to a value that is obtained by the above-mentioned method.

The content of the colloidal silica can be set to 0.5% to 20% by mass based on the total amount of the antifogging agent. When the content is 0.5% by mass or more, sufficient antifogging properties are likely to be exhibited, and when

the content is 20% by mass or less, polycondensation reactions of silanol groups between the particles are suppressed, and the antifogging properties (hydrophilicity) are easily maintained. From this viewpoint, the content of the colloidal silica may be 1% to 20% by mass, may be 1.5% to 15% by mass, may be 2% to 13% by mass, or may be 3% to 10% by mass.

The colloidal silica can be purchased as a colloidal silica dispersion liquid. Examples of the dispersing medium include water, isopropyl alcohol, 1-methoxy-2-propyl alcohol, ethyl alcohol, methyl alcohol, ethylene glycol, ethylene glycol-n-propyl ether, propylene glycol monomethyl ether, propylene glycol monomethyl ether acetate, dimethylacetamide, N-methylpyrrolidone, toluene, methyl ethyl ketone, methyl isobutyl ketone, cyclohexane, and ethyl acetate. The dispersing medium may be water, an alcohol, or a mixed liquid of water and an alcohol. Among these, water is preferred from the viewpoint of general-purpose usability.

The pH of the colloidal silica dispersion liquid may be 2 to 10. When the pH is 6 to 8, in a case where alkoxy groups are present on the surface of the colloidal silica, the hydrolysis reaction rate thereof is slowed. As a result, the colloidal silica having remaining alkoxy groups is easily formed into a coating film. In this case, since polycondensation reactions of silanol groups caused by moisture absorption can be suppressed, the antifogging properties (hydrophilicity) of the film surface are likely to be maintained. When the pH is 2 to 5 or 8 to 10, in a case where alkoxy groups are present on the surface of the colloidal silica, the hydrolysis reaction rate thereof is increased. As a result, more silanol groups can be produced, and the adhesiveness to the substrate is likely to be improved.

The pH of the colloidal silica dispersion liquid can be measured with a pH meter (for example, manufactured by Denki Kagaku Keiki Co., Ltd., product No.: PHL-40). Regarding the measured value of pH, three-point calibration is performed by using standard buffer solutions (phthalate pH buffer solution pH: 4.01 (25°C), neutral phosphate pH buffer solution pH: 6.86 (25°C), or borate pH buffer solution pH: 9.18 (25°C)), subsequently the electrode is placed in a dispersion liquid, and a value obtained after stabilization after a lapse of 2 minutes or longer is adopted.

The zeta potential of the colloidal silica in the dispersion liquid is preferably -50 mV to 40 mV. When the zeta potential is -10 mV to 10 mV, repulsion between the particles is reduced when coated, the dispersion liquid closely adheres to the base material, and therefore, the hydrophilicity of the base material is likely to be improved. When the zeta potential is -50 mV to -11 mV or 11 mV to 40 mV, the particles in the dispersion liquid are likely to repel one another, dispersibility is increased, and therefore, aggregation of the particles is easily suppressed.

The zeta potential of the colloidal silica can be measured with a zeta potential measuring instrument (for example, manufactured by Beckman Coulter, Inc., product No.: Coulter Delsa 440). As a method for measuring the zeta potential, first, a test liquid is prepared by adding pure water to the colloidal silica dispersion liquid such that the silica particle concentration is 5 ppm based on the total amount of the test liquid and dispersing the silica particles by an ultrasonication treatment. Next, when the test liquid is introduced into a measurement cell with platinum electrodes attached on both sides, and a voltage of 10 V is applied to both the electrodes, the charged silica particles migrate to the side of an electrode having a polarity opposite to the charge. Then, the migration speed of these charged silica particles is obtained.

The raw material of the colloidal silica may be water glass or an alkoxysilane and is not particularly limited.

The production process in a case where the raw material is water glass is not particularly limited, however, for example, particles are produced by heating and concentrating sodium silicate by a hydrothermal synthesis method the resultant. For example, aggregates having a three-dimensional network structure may be produced in a state in which the growth of primary particles is suppressed at an acidic pH, and these aggregates may be crushed, or aggregates in a block form may be produced by accelerating the growth of primary particles at an alkaline pH, and these aggregates may be crushed.

The production process in a case where the raw material is an alkoxysilane is not particularly limited, however, for example, particles are produced by subjecting an alkoxysilane to sol-gel synthesis. For example, a hydrolysis reaction of the alkoxysilane is accelerated, subsequently a polycondensation reaction is accelerated to obtain a gel, and then the internal solvent may be removed by a heat treatment. Alternatively, after a gel is obtained, the solvent may be substituted with a predetermined solvent.

A commercially available product may be used as the colloidal silica dispersion liquid, and examples include ST-PS-SO (manufactured by Nissan Chemical Corporation), ST-PS-MO (manufactured by Nissan Chemical Corporation), ST-PS-M (manufactured by Nissan Chemical Corporation), ST-PS-S (manufactured by Nissan Chemical Corporation), ST-UP (manufactured by Nissan Chemical Corporation), ST-OUP (manufactured by Nissan Chemical Corporation), IPA-ST-UP (manufactured by Nissan Chemical Corporation), MA-ST-UP (manufactured by Nissan Chemical Corporation), PGM-ST-UP (manufactured by Nissan Chemical Corporation), MEK-ST-UP (manufactured by Nissan Chemical Corporation), IPA-ST (manufactured by Nissan Chemical Corporation), IPA-ST-L (manufactured by Nissan Chemical Corporation), IPA-ST-ZL (manufactured by Nissan Chemical Corporation), MA-ST-M (manufactured by Nissan Chemical Corporation), MA-ST-L (manufactured by Nissan Chemical Corporation), MA-ST-ZL (manufactured by Nissan Chemical Corporation), EG-ST (manufactured by Nissan Chemical Corporation), EG-ST-XL-30 (manufactured by Nissan Chemical Corporation), NPC-ST-30 (manufactured by Nissan Chemical Corporation), PGM-ST (manufactured by Nissan Chemical Corporation), DMAC-ST (manufactured by Nissan Chemical Corporation), DMAC-ST-ZL (manufactured by Nissan

Chemical Corporation), NMP-ST (manufactured by Nissan Chemical Corporation), TOL-ST (manufactured by Nissan Chemical Corporation), MEK-ST-40 (manufactured by Nissan Chemical Corporation), MEK-ST-L (manufactured by Nissan Chemical Corporation), MEK-ST-ZL (manufactured by Nissan Chemical Corporation), MIBK-ST (manufactured by Nissan Chemical Corporation), MIBK-ST-L (manufactured by Nissan Chemical Corporation), CHO-ST-M (manufactured by Nissan Chemical Corporation), EAC-ST (manufactured by Nissan Chemical Corporation), PMA-ST (manufactured by Nissan Chemical Corporation), MEK-EC-2130Y (manufactured by Nissan Chemical Corporation), MEK-EC-2430Z (manufactured by Nissan Chemical Corporation), MEK-EC-2140Z (manufactured by Nissan Chemical Corporation), MEK-AC-4130Z (manufactured by Nissan Chemical Corporation), MEK-AC-5140Z (manufactured by Nissan Chemical Corporation), PGM-AC-2140Y (manufactured by Nissan Chemical Corporation), PGM-AC-4130Y (manufactured by Nissan Chemical Corporation), MIBK-AC-2140Z (manufactured by Nissan Chemical Corporation), MIBK-SD-L (manufactured by Nissan Chemical Corporation), ST-XS (manufactured by Nissan Chemical Corporation), ST-OXS (manufactured by Nissan Chemical Corporation), ST-NXS (manufactured by Nissan Chemical Corporation), ST-CXS (manufactured by Nissan Chemical Corporation), ST-S (manufactured by Nissan Chemical Corporation), ST-OS (manufactured by Nissan Chemical Corporation), ST-NS (manufactured by Nissan Chemical Corporation), ST-30 (manufactured by Nissan Chemical Corporation), ST-O (manufactured by Nissan Chemical Corporation), ST-N (manufactured by Nissan Chemical Corporation), ST-C (manufactured by Nissan Chemical Corporation), ST-AK (manufactured by Nissan Chemical Corporation), ST-50-T (manufactured by Nissan Chemical Corporation), ST-O-40 (manufactured by Nissan Chemical Corporation), ST-N-40 (manufactured by Nissan Chemical Corporation), ST-CM (manufactured by Nissan Chemical Corporation), ST-30L (manufactured by Nissan Chemical Corporation), ST-OL (manufactured by Nissan Chemical Corporation), ST-AK-L (manufactured by Nissan Chemical Corporation), ST-YL (manufactured by Nissan Chemical Corporation), ST-OYL (manufactured by Nissan Chemical Corporation), ST-AK-YL (manufactured by Nissan Chemical Corporation), ST-ZL (manufactured by Nissan Chemical Corporation), MP-1040 (manufactured by Nissan Chemical Corporation), MP-2040 (manufactured by Nissan Chemical Corporation), MP-4540M (manufactured by Nissan Chemical Corporation), PL-1-IPA (manufactured by FUSO CHEMICAL Co., Ltd.), PL-1-TOL (manufactured by FUSO CHEMICAL Co., Ltd.), PL-2L-PGME (manufactured by FUSO CHEMICAL Co., Ltd.), PL-2L-MEK (manufactured by FUSO CHEMICAL Co., Ltd.), PL-2L (manufactured by FUSO CHEMICAL Co., Ltd.), PL-3 (manufactured by FUSO CHEMICAL Co., Ltd.), PL-4 (manufactured by FUSO CHEMICAL Co., Ltd.), PL-5 (manufactured by FUSO CHEMICAL Co., Ltd.), PL-1H (manufactured by FUSO CHEMICAL Co., Ltd.), PL-3H (manufactured by FUSO CHEMICAL Co., Ltd.), PL-5H (manufactured by FUSO CHEMICAL Co., Ltd.), BS-2L (manufactured by FUSO CHEMICAL Co., Ltd.), BS-3L (manufactured by FUSO CHEMICAL Co., Ltd.), BS-5L (manufactured by FUSO CHEMICAL Co., Ltd.), HL-2L (manufactured by FUSO CHEMICAL Co., Ltd.), HL-3L (manufactured by FUSO CHEMICAL Co., Ltd.), HL-4L (manufactured by FUSO CHEMICAL Co., Ltd.), PL-3-C (manufactured by FUSO CHEMICAL Co., Ltd.), PL-3-D (manufactured by FUSO CHEMICAL Co., Ltd.), TCSOL800 (manufactured by TAMA CHEMICALS CO., LTD.), SI-40 (manufactured by JGC Catalysts and Chemicals, Ltd.), SI-50 (manufactured by JGC Catalysts and Chemicals, Ltd.), SI-45P (manufactured by JGC Catalysts and Chemicals, Ltd.), SI-80P (manufactured by JGC Catalysts and Chemicals, Ltd.), SIK-23 (manufactured by JGC Catalysts and Chemicals, Ltd.), S-30H (manufactured by JGC Catalysts and Chemicals, Ltd.), SIK-15 (manufactured by JGC Catalysts and Chemicals, Ltd.), and SI-550 (manufactured by JGC Catalysts and Chemicals, Ltd.).

(Silane coupling agent having polyether group)

Examples of the silane coupling agent having a polyether group include a silane compound having a structure represented by $-(O-R^{20})_x-$(wherein $R^{20}$ represents an alkylene group, and x represents an integer of 2 or greater) (that is, a polyoxyalkylene group). The silane coupling agent having a polyether group may have a perfluoropolyether group.

The silane coupling agent having a polyether group may be a polyether silane represented by the following General Formula (1).

[Chemical Formula 1]

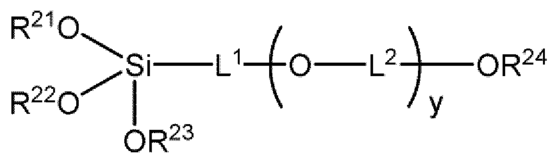

(1)

In Formula (1), $R^{21}$, $R^{22}$, $R^{23}$, and $R^{24}$ each independently represent an alkyl group having 1 to 6 carbon atoms; $L^1$ represents an alkylene group having 1 to 6 carbon atoms; $L^2$ represents an alkylene group having 1 to 6 carbon atoms; and y represents an integer of 3 to 25.

$R^{21}$, $R^{22}$, $R^{23}$, and $R^{24}$ may be each a methyl group, an ethyl group, a propyl group, or a butyl group. $L^1$ may be an ethylene group, a propylene group, or a butylene group. $L^2$ may be an ethylene group, a propylene group, or a butylene group. y may be 10 to 20 or may be 11 to 15.

Examples of the polyether silane represented by General Formula (1) include A1230 (manufactured by Momentive Performance Materials Japan LLC) and X-12-641 (manufactured by Shin-Etsu Chemical Co., Ltd.).

The content of the silane coupling agent having a polyether group may be 10 to 5000 parts by mass, may be 30 to 4500 parts by mass, or may be 50 to 4000 parts by mass, with respect to 100 parts by mass of the binder compound, from the viewpoint of fogging resistance.

The content of the silane coupling agent having a polyether group may be 10 to 5000 parts by mass, may be 30 to 4500 parts by mass, or may be 50 to 4000 parts by mass, with respect to 100 parts by mass of the silica particles, from the viewpoint of fogging resistance.

The content of the silane coupling agent having a polyether group may be 0.01% to 1% by mass, may be 0.01% to 0.05% by mass, or may be 0.01% to 0.03% by mass, based on the total amount of the antifogging agent, from the viewpoint of fogging resistance.

(Second silane coupling agent)

The antifogging agent of the present embodiment may include a second silane coupling agent other than the above-mentioned silane coupling agent having a polyether group. The second silane coupling agent can be used for the purpose of addition or surface treatment.

The second silane coupling agent may be, for example, a compound represented by the following General Formula (S-1).

$$(R^{31})_m\text{-Si(-OR}^{32})_n \quad ... \qquad \text{(S-1)}$$

In Formula (S-1), $R^{31}$ represents a monovalent organic group; $R^{32}$ represents an alkyl group having 1 to 3 carbon atoms; m represents an integer of 0 to 2; n represents an integer of 1 to 3; and m + n = 4. When n is 2 or greater, multiple $R^{32}$s may be identical or may be different.

Examples of $R^{31}$ include a C1-C30 branched or linear alkyl group, an alkenyl group, a C3-C10 cycloalkyl group, a C6-C10 aryl group, an epoxy group, an acryloyl group, a methacryloyl group, an amino group, a ureido group, an isocyanate group, an isocyanurate group, a mercapto group, and a fluoro group.

Examples of the silane coupling agent having a C1-C30 branched or linear alkyl group include methyltrimethoxysilane (KBM-13 manufactured by Shin-Etsu Chemical Co., Ltd., and the like), ethyltrimethoxysilane, propyltrimethoxysilane (KBM-3033 manufactured by Shin-Etsu Chemical Co., Ltd., and the like), butyltrimethoxysilane, pentyltrimethoxysilane, hexyltrimethoxysilane (KBM-3063 manufactured by Shin-Etsu Chemical Co., Ltd., and the like), heptyltrimethoxysilane, octyltrimethoxysilane, nonyltrimethoxysilane, decyltrimethoxysilane (KBM-3103C manufactured by Shin-Etsu Chemical Co., Ltd., and the like), undecyltrimethoxysilane, dodecyltrimethoxysilane, tetradecyltrimethoxysilane, stearyltrimethoxysilane, methyltriethoxysilane (KBE-13 manufactured by Shin-Etsu Chemical Co., Ltd., and the like), ethyltriethoxysilane, propyltriethoxysilane (KBE-3033 manufactured by Shin-Etsu Chemical Co., Ltd., and the like), butyltriethoxysilane, pentyltriethoxysilane, hexyltriethoxysilane (KBE-3063 manufactured by Shin-Etsu Chemical Co., Ltd., and the like), heptyltriethoxysilane, octyltriethoxysilane (KBE-3083 manufactured by Shin-Etsu Chemical Co., Ltd., and the like), nonyltriethoxysilane, decyltriethoxysilane, undecyltriethoxysilane, dodecyltriethoxysilane, tetradecyltriethoxysilane, and stearyltriethoxysilane.

Examples of the silane coupling agent having an alkenyl group include vinyltrimethoxysilane (KBM-1003 manufactured by Shin-Etsu Chemical Co., Ltd., and the like), vinyltriethoxysilane (KBE-1003 manufactured by Shin-Etsu Chemical Co., Ltd., and the like), allyltrimethoxysilane, and allyltriethoxysilane.

Examples of the silane coupling agent having a C6-C10 aryl group include phenyltrimethoxysilane (KBM-103, KBM-202SS, KBE-103, KBE-202 manufactured by Shin-Etsu Chemical Co., Ltd., and the like), and p-styryltrimethoxysilane (KBM-1403 manufactured by Shin-Etsu Chemical Co., Ltd., and the like).

Examples of the silane coupling agent having an epoxy group include 3-glycidyloxypropyltrimethoxysilane (KBM-403 manufactured by Shin-Etsu Chemical Co., Ltd., and the like), 8-glycidoxyoctyltrimethoxysilane (KBM-4803 manufactured by Shin-Etsu Chemical Co., Ltd., and the like), 3-glycidyloxypropyltriethoxysilane (KBE-403 manufactured by Shin-Etsu Chemical Co., Ltd., and the like), KBE-402, X-12-981S, and X-12-984S (all trade names, manufactured by Shin-Etsu Chemical Co., Ltd.).

Examples of the silane coupling agent having an acryloyl group include 3-acryloxypropyltrimethoxysilane (KBM-5103 manufactured by Shin-Etsu Chemical Co., Ltd., and the like), X-12-1048, and X-12 -1050 (all trade names, manufactured by Shin-Etsu Chemical Co., Ltd.).

Examples of the silane coupling agent having a methacryloyl group include 3-methacryloxypropyltrimethoxysilane (KBM-503 manufactured by Shin-Etsu Chemical Co., Ltd., and the like), 8-methacryloxyoctyltrimethoxysilane (KBM-5803 manufactured by Shin-Etsu Chemical Co., Ltd., and the like), 3-methacryloxypropyltriethoxysilane (KBE-503 manufactured by Shin-Etsu Chemical Co., Ltd., and the like), 3-methacryloxypropylmethyldimethoxysilane (KBM-502 manufactured by Shin-Etsu Chemical Co., Ltd., and the like), and 3-methacryloxypropylmethyldiethoxysilane (KBE-502 manufactured by Shin-Etsu Chemical Co., Ltd., and the like).

Examples of the silane coupling agent having an amino group include 3-aminopropyltrimethoxysilane (KBM-903 manufactured by Shin-Etsu Chemical Co., Ltd., and the like), 3-aminopropyltriethoxysilane (KBE-903 manufactured by Shin-Etsu Chemical Co., Ltd., and the like), N-2-(aminoethyl)-3-aminopropyltrimethoxysilane (KBM-603 manufactured by Shin-Etsu Chemical Co., Ltd., and the like), N-2-(aminoethyl)-8-aminooctyltrimethoxysilane (KBM-6803 manufactured by Shin-Etsu Chemical Co., Ltd., and the like), N-2-(aminoethyl)-3-aminopropyltriethoxysilane (KBE-603 manufactured by Shin-Etsu Chemical Co., Ltd., and the like), N-phenyl-3-aminopropyltrimethoxysilane (KBM-573 manufactured by Shin-Etsu Chemical Co., Ltd., and the like), N-2-(aminoethyl)-3-aminopropylmethyldimethoxysilane (KBM-602 manufactured by Shin-Etsu Chemical Co., Ltd., and the like), N-2-(aminoethyl)-3-aminopropylmethyldiethoxysilane (KBE-602 manufactured by Shin-Etsu Chemical Co., Ltd., and the like), N-(vinylbenzyl)-2-aminoethyl-3-aminopropyltrimethoxysilane (KBM-575 manufactured by Shin-Etsu Chemical Co., Ltd., and the like), 3-triethoxysilyl-N-(1,3-dimethylbutylidene)propylamine (KBE-9103P manufactured by Shin-Etsu Chemical Co., Ltd., and the like), and X-12-972F (trade name, manufactured by Shin-Etsu Chemical Co., Ltd.).

Examples of the silane coupling agent having a ureido group include 3-ureidopropyltriethoxysilane (KBE-585A manufactured by Shin-Etsu Chemical Co., Ltd., and the like).

Examples of the silane coupling agent having an isocyanate group include 3-isocyanatopropyltriethoxysilane (KBE-9007 manufactured by Shin-Etsu Chemical Co., Ltd., and the like) and X-12-1159L (trade name, manufactured by Shin-Etsu Chemical Co., Ltd.).

Examples of the silane coupling agent having an isocyanurate group include tris(3-trimethoxysilylpropyl) isocyanurate (KBM-9659 manufactured by Shin-Etsu Chemical Co., Ltd., and the like).

Examples of the silane coupling agent having a mercapto group include 3-mercaptopropyltrimethoxysilane (KBM-803 manufactured by Shin-Etsu Chemical Co., Ltd., and the like), 3-mercaptopropylmethyldimethoxysilane (KBM-802 manufactured by Shin-Etsu Chemical Co., Ltd., and the like), X-12-1154, and X-12-1156 (trade names, manufactured by Shin-Etsu Chemical Co., Ltd.).

Examples of the silane coupling agent having a fluoro group include 3,3,3-trifluoropropyltrimethoxysilane (KBM-7103 manufactured by Shin-Etsu Chemical Co., Ltd., and the like).

Examples of silane coupling agents other than those described above include KBM-22, KBE-22, KBM-3066, KBE-04 (all trade names, manufactured by Shin-Etsu Chemical Co., Ltd.), ETHYL SILICATE 28, ETHYL SILICATE 28P, N-PROPYL SILICATE, and N-BUTYL SILICATE all trade names, manufactured by COLCOAT CO., LTD.).

The second silane coupling agent may be a silylating agent. A silylation reaction can be carried out by incorporating a disiloxane compound and/or a monoalkoxysilane compound. Examples of the disiloxane compound as the silylating agent include a compound represented by the following General Formula (I).

[Chemical Formula 2]

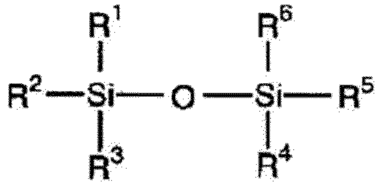

( I )

In Formula (I), $R^1$, $R^2$, $R^3$, $R^4$, $R^5$, and $R^6$ each independently represent an alkyl group having 1 to 20 carbon atoms or a phenyl group.

Examples of the disiloxane compound include hexamethyldisiloxane, 1,3-dibutyltetramethyldisiloxane, 1,3-diphenyltetramethyldisiloxane, 1,3-divinyltetramethyldisiloxane, hexaethyldisiloxane, and 3-glycidoxypropylpentamethyldisiloxane, and hexamethyldisiloxane is preferred.

Examples of the monoalkoxysilane compound as the silylating agent include a compound represented by the following General Formula (II).

[Chemical Formula 3]

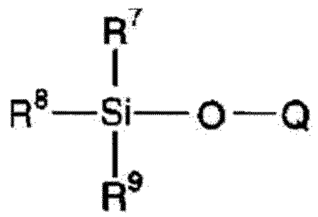

(II)

(wherein in Formula (II), $R^7$, $R^8$, and $R^9$ each independently represent an alkyl group having 1 to 20 carbon atoms or a phenyl group; and Q represents an alkyl group having 1 to 3 carbon atoms.)

Examples of the monoalkoxysilane compound include trimethylmethoxysilane, trimethylethoxysilane, trimethylpropoxysilane, phenyldimethylmethoxysilane, and chloropropyldimethylmethoxysilane, and trimethylmethoxysilane, trimethylethoxysilane, and trimethylpropoxysilane are preferred.

The silylating agents may be used singly, or two or more kinds thereof may be used in combination.

When the second silane coupling agent is used as an additive or a surface treating agent, the content of the second silane coupling agent may be 1 to 5000 parts by mass, may be 3 to 4500 parts by mass, or may be 5 to 4000 parts by mass, with respect to 100 parts by mass of the binder compound.

(Binder compound)

According to the present specification, the binder compound refers to a compound that binds to silica particles and crosslinks the silica particles to improve the coating film strength. Incidentally, the above-mentioned silane coupling agent having a polyether group and the above-mentioned second silane coupling agent are not included in the binder compound.

Examples of the binder compound include epoxy compounds such as polyethylene glycol diglycidyl ether; resin compositions such as polyvinyl alcohol, a modified polyvinyl alcohol, polyacrylic acid, an acrylic resin, an epoxy resin, a urethane resin, polyvinylpyrrolidone, a polyvinylpyrrolidone-vinyl acetate copolymer (vinyl acetate-pyrrolidone copolymer), and a polyamine-based resin; saccharides such as cellulose and dextrin; polysaccharides such as cellulose nanofibers; silicate oligomers; and silicate polymers.

Examples of the silane oligomer include ETHYL SILICATE 40, ETHYL SILICATE 48, EMS-485, METHYL SILICATE 51, METHYL SILICATE 53A, COLCOAT PX, and COLCOAT N-103X (all manufactured by COLCOAT CO., LTD.).

Regarding the binder compound, one kind thereof may be used alone, or two or more kinds thereof may be used in combination, according to the purpose, usage application, and the like.

The binder compound may be an epoxy compound, from the viewpoint of fogging resistance. Examples of the epoxy compound include ethylene glycol diglycidyl ether, diethylene glycol diglycidyl ether, polyethylene glycol diglycidyl ether, propylene glycol diglycidyl ether, and polypropylene glycol diglycidyl ether.

The content of the binder compound may be 0.1 to 1000 parts by mass, may be 0.5 to 500 parts by mass, or may be 1 to 100 parts by mass, with respect to 100 parts by mass of the silica particles, from the viewpoints of coating film strength improvement and fogging resistance.

(Liquid medium)

The liquid medium is a medium responsible for dispersion of the silica particles in the antifogging agent, dissolution of the binder compound and the silane coupling agent, and the like. The liquid medium may be a medium having a boiling point of lower than 185°C. The liquid medium is volatilized by heating during the formation of an antifogging film, and as a result, the silica particles approach one another and facilitate the formation of bonding. The liquid medium may be identical with or different from the dispersing medium included in the above-mentioned colloidal silica dispersion liquid.

As the liquid medium, for example, water, an organic solvent, or a mixed solvent of these can be used. Examples of the organic solvent include alcohols such as methyl alcohol, ethyl alcohol, 1-propanol, isopropyl alcohol, 1-butyl alcohol, 2-butyl alcohol, isobutyl alcohol, diacetone alcohol, 1-butoxy-2-propanol, 1-hexanol, 1-octanol, 2-octanol, and 3-methoxy-3-methyl-1-butanol; glycols such as polyethylene glycol; glycol ethers such as ethylene glycol monomethyl ether, ethylene glycol monoethyl ether, ethylene glycol monopropyl ether, ethylene glycol monobutyl ether, ethylene

glycol mono-tert-butyl ether, propylene glycol monomethyl ether acetate, propylene glycol n-propyl ether, and propylene glycol monomethyl ether; ketones such as acetone and methyl ethyl ketone; ethers such as tetrahydrofuran and dioxane; esters such as ethyl acetate and butyl acetate; cyclic hydrocarbons such as cyclohexane; and acetonitrile. Regarding these, one kind thereof may be used, or two or more kinds thereof may be used as a mixture; however, a liquid medium that can be uniformly dispersed in the above-mentioned colloidal silica dispersion liquid is desired. For example, when the dispersing medium of the colloidal silica dispersion liquid is water, ethylene glycol monobutyl ether and the like are preferred.

(Metal chelate)

The antifogging agent of the present embodiment may further include a metal chelate. A metal chelate functions as a binding promoting material and can form an antifogging film having excellent moisture resistance and water resistance.

The metal chelate is not particularly limited and can be appropriately selected from known metal chelates. Examples of the metal chelate include a zirconium chelate compound, a titanium chelate compound, a nickel chelate compound, an aluminum chelate compound, and a tin chelate compound.

Examples of the zirconium chelate compound include zirconium tetrakis(acetylacetonate) and zirconium bis(butoxy)bis(acetylacetonate).

Examples of the titanium chelate compound include titanium tetrakis(acetylacetonate), and titanium bis(butoxy)bis(acetylacetonate).

Examples of the nickel chelate compound include CR12 (manufactured by Momentive Performance Materials Japan LLC) and $Ni(AcAc)_2$.

Examples of the aluminum chelate compound include aluminum bis(ethylacetoacetate)mono(acetylacetonate), aluminum tris(acetylacetonate), and aluminum ethyl acetoacetate diisopropylate.

Examples of the tin chelate compound include dibutyltin diacetate, dibutyltin dilaurate, and dibutyltin dioctoate.

Among those described above, the metal chelate is more preferably a zirconium chelate compound, a titanium chelate compound, an aluminum chelate compound, or a nickel chelate compound, from the viewpoints of moisture resistance and water resistance. Since a zirconium chelate compound, a titanium chelate compound, and an aluminum chelate compound have larger numbers of bonding points with silica particles (for example, colloidal silica), stronger bonding can be formed.

The metal chelate may be a commercially available product. Examples of the zirconium chelate compound include ZC-150 (manufactured by Matsumoto Fine Chemical Co., Ltd.), examples of the titanium chelate compound include TC-310 (manufactured by Matsumoto Fine Chemical Co., Ltd.), examples of the aluminum chelate compound include ALUMICHELATE D (manufactured by Kawaken Fine Chemicals Co., Ltd.) and PLAINACT AL-M (manufactured by Ajinomoto Fine Techno Co., Inc.), and examples of the nickel chelate compound include acetylacetone nickel(II) hydrate (manufactured by Tokyo Chemical Industry Co., Ltd.).

The antifogging agent may include one kind of metal chelate or may include two or more kinds of metal chelates.

The content of the metal chelate may be 0.01 to 5.0 parts by mass, may be 0.05 to 2.0 parts by mass, or may be 0.1 to 1.0 parts by mass, with respect to 100 parts by mass of the silica particles, from the viewpoints of moisture resistance and water resistance.

(Other additives)

The antifogging agent of the present embodiment may further include at least one additive (hereinafter, also referred to as "additive AD") selected from the group consisting of an organic phosphoric acid ester having a branched structure and an organic sulfonic acid salt having a branched structure, from the viewpoint of fogging resistance. The organic phosphoric acid ester may have a branched structure in the ester part.

Examples of the branched structure include a branched alkyl group.

Examples of the organic phosphoric acid ester having a branched structure include a compound represented by the following General Formula (AD-1).

$$P(=O)(OR^{41})_3 \ldots \qquad (AD\text{-}1)$$

In Formula (AD-1), $R^{41}$ represents an organic group having a branched structure.

$R^{41}$ may be a branched alkyl group having 1 to 15 carbon atoms.

Examples of the compound represented by General Formula (AD-1) include trisethylhexyl phosphate.

Examples of the organic sulfonic acid salt having a branched structure include a compound represented by the following General Formula (AD-2).

$R^{51}$-S(=O)$_2$O$^-$ · M$^+$ ... (AD-2)

In Formula (AD-1), $R^{51}$ represents an organic group having a branched structure; and M represents Na.

Examples of the compound represented by General Formula (AD-2) include sulfosuccinic acid diester salts such as sodium di-2-ethylhexylsulfosuccinate; and alkylbenzenesulfonic acid salts such as sodium alkyl (C12-14) benzenesulfonate.

The content of the additive AD may be 0.1 to 10 parts by mass with respect to 100 parts by mass of the silica particles, from the viewpoint of fogging resistance.

The antifogging agent of the present embodiment may further include acetic acid. The content of acetic acid may be 1 to 100 parts by mass, may be 5 to 50 parts by mass, or may be 10 to 30 parts by mass, with respect to 100 parts by mass of the silica particles, from the viewpoints of pH adjustment of the solution and the coating film characteristics.

The antifogging agent of the present embodiment may also include various conventionally used additives such as an oxidation inhibitor, an ultraviolet absorber, and a light stabilizer, as necessary, to the extent that predetermined effects are obtained. Furthermore, in addition to the above-mentioned acetic acid, the antifogging agent may include nitric acid, hydrochloric acid, nitric acid, phosphoric acid, sulfuric acid paratoluenesulfonic acid, benzenesulfonic acid, methanesulfonic acid, phenolsulfonic acid, oxalic acid, maleic acid, malonic acid, tartaric acid, citric acid, malic acid, acetic acid, lactic acid, succinic acid, benzoic acid, ammonia, urea, imidazole, sodium carbonate, calcium carbonate, sodium acetate, and the like as antifoaming agents, catalysts, and the like that are used when preparing raw materials. Furthermore, from the viewpoint of the viscosity of the solution, a thickener may also be used.

The antifogging agent (and the hydrophilizing agent that will be described below) may be non-surfactant-based agents. The term non-surfactant-based means that the content of the surfactant, which is known as a component of the antifogging agent, is 1% by mass or less based on the total amount of non-volatile components of the antifogging agent, or the antifogging agent contains no surfactant. The surfactant may be a surfactant such as an anionic surfactant, a cationic surfactant, a nonionic surfactant, or an amphoteric surfactant.

<Antifogging method for vehicular lamp structure>

An antifogging method for vehicular lamp structure of the present embodiment includes a step (application step) of applying the above-mentioned antifogging agent of the present embodiment on the inner surface of a lens included in a vehicular lamp structure and forming a coating film; and a step (drying step) of drying the coating film. Prior to the application step, a cleaning step may be carried out for the purpose of removing a mold release agent that may have adhered to the surface of the lens.

(Cleaning step)

The cleaning liquid used in the cleaning step is not particularly limited, however, in view of the fact that the base material of the inner surface of the lens included in the most general-purpose vehicular lamp structures is polycarbonate, a liquid that does not dissolve a polycarbonate base material is preferred, and water, an alcohol, and the like are more preferred. Specifically, water, isopropyl alcohol, methanol, ethanol, and the like are preferred. The cleaning step may also be carried out by wiping the base material by using cloth or the like soaked with the cleaning liquid.

(Application step)

The application step is, for example, a step of applying the above-described antifogging agent on the inner surface of a lens. The antifogging agent may be applied over the entire inner surface of the lens or may be applied selectively on a portion.

The application method is not particularly limited, however, examples include a spin coating method, a dip coating method, a spray coating method, a flow coating method, a bar coating method, and a gravure coating method. Particularly, a spray coating method is preferred from the viewpoint that an antifogging film having a uniform thickness is likely to be formed even on a surface to be treated with surface unevenness, and from the viewpoint that productivity is high, and the use efficiency of the antifogging agent is high. These methods may be used singly, or two or more kinds thereof may be used in combination. Incidentally, application may also be carried out by soaking the antifogging agent into cloth or the like.

The coating amount depends on the components of the antifogging agent, contents of the components, and the like and is therefore not limited, however, for example, the coating amount can be set to $10^{-9}$ to $10^3$ g/m$^2$.

The temperature of the antifogging agent used in the application step may be, for example, 1°C to 50°C or may

be 10°C to 30°C. By setting the temperature to 1°C or higher, the antifogging properties and adhesiveness tend to be further improved, and by setting the temperature to 50°C or lower, there is a tendency that transparency of the antifogging film is likely to be obtained. The time for treatment with the antifogging agent can be set to, for example, 1 second to 1 hour and can be set to 5 to 30 minutes.

(Drying step)

In the present step, after the antifogging agent is applied, the liquid medium is volatilized from the antifogging agent. The liquid medium can be volatilized by, for example, leaving the antifogging agent to stand at normal temperature. However, the adhesiveness between the inner surface of the lens and the antifogging film can be further improved by carrying out the present step at a higher temperature. The drying temperature at this time is not particularly limited and varies depending on the heat-resistant temperature of the lens, however, for example, the drying temperature may be 5°C to 300°C or may be 10°C to 200°C. By setting the temperature to 5°C or higher, more excellent adhesiveness can be achieved, and by setting the temperature to 300°C or lower, deterioration due to heat can be further suppressed. The drying time can be set to 30 seconds to 150 hours. As a result of the present step, an antifogging film including silica particles is formed on the inner surface of the lens.

The thickness of the antifogging film is not particularly limited, however, from the viewpoints of transparency, antifogging properties, and the like, the thickness can be set to about 1 nm to 1000 μm, 5 nm to 10 μm, or 10 nm to 1 μm. The film thickness of the antifogging film can be measured by using, for example, a non-contact type film thickness meter, Optical NanoGauge C13027 (manufactured by HAMAMATSU PHOTONICS K.K.).

The water contact angle of the antifogging agent can be set to 40° or less with respect to 1 μL of a liquid droplet of ultrapure water, and the water contact angle may be 20° or less or may be 10° or less. As a result, the antifogging properties can be sufficiently exhibited. The contact angle can be calculated by using, for example, an average value of ten measurements made using a contact angle meter.

The antifogging film can have a visible light transmittance of 85% or higher, 90% or higher, or 95% or higher. As a result, the luminance of the vehicular lamp can be maintained sufficiently high. The visible light transmittance of the antifogging film can be measured by using, for example, a U-3500 type self-recording spectrophotometer (manufactured by Hitachi, Ltd.).

The antifogging film can have a haze of 6.0 or less, 3.0 or less, or 1.0 or less.

As a result, the luminance of the vehicular lamp can be maintained sufficiently high. The haze of the antifogging film can be measured by using, for example, a haze meter (NDH2000 manufactured by NIPPON DENSHOKU INDUSTRIES CO., LTD.).

The antifogging film can have a YI of 4.0 or less, 3.0 or less, or 1.5 or less. As a result, the luminance of the vehicular lamp can be maintained sufficiently high. The YI of the antifogging film can be measured by using, for example, a chromaticity measuring instrument (300A, manufactured by NIPPON DENSHOKU INDUSTRIES CO., LTD.).

FIG. 1 is a diagram schematically showing a vehicular lamp structure. The inner surface of the lens of this vehicular lamp structure is subjected to an antifogging treatment by an antifogging method for a vehicular lamp structure using the above-described antifogging agent. That is, the vehicular lamp structure includes an antifogging film formed from the antifogging agent on the inner surface of the lens. The lamp structure 10 shown in FIG. 1 includes a lamp housing 3 configured to have a recessed shape with one side open, and a lens 1 closing the open side of the lamp housing 3. The material of the lens 1 is, for example, polycarbonate. A lamp chamber S is formed by the lamp housing 3 and the lens 1. In the lamp housing 3, a light source 4 that is disposed in the lamp chamber S is installed. As the light source 4, an incandescent bulb, an LED bulb, a halogen bulb, or the like is employed as appropriate. Inside the lamp chamber S, as shown in the diagram, a reflector 5 that functions as a reflecting plate for the light of the light source 4 may be provided so as to surround the light source 4 from the rear side. On the inner surface of the lens 1, that is, the surface facing the lamp chamber S, an antifogging film 2 formed from the above-described antifogging agent is provided. The antifogging film 2 may be provided over the entire inner surface of the lens 1 or may be provided selectively on a portion as shown in FIG. 1. According to the lamp structure 10, for example, even when a cover or the like made of a rubber material is provided around the light source 4 or on the rear side of the light source 4, the antifogging film 2 can have sufficient antifogging properties over a long time period.

<Hydrophilizing agent>

The antifogging agent can hydrophilize a target surface, and therefore, the antifogging agent can be referred to as a hydrophilizing agent. The antifogging agent and the hydrophilizing agent are both treatment agents including silica particles, a binder compound, a silane coupling agent having a polyether group, and a liquid medium. With regard to specific embodiments of the hydrophilizing agent, reference can be made to the description given above in relation to the antifogging agent.

A base material surface can be hydrophilized by using the hydrophilizing agent. On a hydrophilized surface, hydrophilicity is less likely to deteriorate even after a fogging test, and when moisture adheres, a satisfactory water film can be formed. As a result, even in an environment exposed to volatile components, the occurrence of fog on the base material can be suppressed. The treatment for the base material can be carried out in the same manner as in the above-mentioned antifogging method.

In addition to the above-described polycarbonate, examples of the material constituting the base material include resin materials such as an acrylic polymer, polyamide, polyacrylate, polyimide, an acrylonitrile-styrene copolymer, a styrene-acrylonitrile-butadiene copolymer, polyvinyl chloride, polyethylene, and polycarbonate; metal materials such as aluminum, magnesium, copper, zinc, iron, titanium, chromium, manganese, cobalt, and nickel; ceramic materials such as silicon oxide, aluminum oxide, magnesium oxide, copper oxide, zinc oxide, iron oxide, titanium oxide, chromium oxide, manganese oxide, cobalt oxide, and nickel oxide; and glass. In addition to the above-described vehicular lamp structure (automotive headlight or the like), examples of articles including such base materials include a vehicular windshield, eyeglasses, goggles, a mirror, a storage container, a window, and a camera lens.

The hydrophilizing agent may also be applied as a dew condensation preventing agent, a snow accretion preventing agent, or an anti-fouling agent.

**Examples**

Next, the present invention will be described in more detail by way of the following Examples, however, the present invention is not intended to be limited by these Examples.

(Example 1)

3.33 g of a water-dispersed silica sol, ST-OUP (manufactured by Nissan Chemical Corporation, 15% by mass), 0.50 g of a 10% by mass aqueous solution of acetic acid, 0.50 g of a 10% by mass IPA solution of A1230 (manufactured by Momentive), which is a silane coupling agent having a polyether group, and 0.50 g of a 1% by mass aqueous solution of an epoxy compound, DENACOL EX-830 (manufactured by Nagase ChemteX Corporation), were mixed, and the mixture was stirred for one hour. Subsequently, 5.17 g of water was further added thereto and mixed, and the mixture was stirred for one hour to obtain a mother liquor.

0.44 g of water, 34.62 g of IPA, and 4.94 g of ethylene glycol monobutyl ether were mixed to prepare a diluent. This diluent and the mother liquor were mixed to obtain a coating liquid.

(Example 2)

3.33 g of a water-dispersed silica sol, ST-OUP (manufactured by Nissan Chemical Corporation, 15% by mass), 0.50 g of a 10% by mass aqueous solution of acetic acid, 0.50 g of a 10% by mass IPA solution of A1230 (manufactured by Momentive), which is a silane coupling agent having a polyether group, and 0.50 g of a 1% by mass aqueous solution of an epoxy compound, DENACOL EX-830 (manufactured by Nagase ChemteX Corporation), were mixed, and the mixture was stirred for one hour. Subsequently, 4.67 g of water and 0.50 g of a 1% by mass IPA solution of a metal chelate, Al-M (manufactured by Kawaken Fine Chemicals Co., Ltd.), were further added thereto and mixed, and the mixture was stirred for one hour to obtain a mother liquor.

0.94 g of water, 34.12 g of IPA, and 4.94 g of ethylene glycol monobutyl ether were mixed to prepare a diluent. This diluent and the mother liquor were mixed to obtain a coating liquid.

(Example 3)

A coating liquid was obtained in the same manner as in Example 2, except that in the preparation of the mother liquor, the blending amount of the 10% by mass IPA solution of A1230 was changed to 1.50 g, the blending amount of water was changed to 3.67 g, and in the preparation of the diluent, 1.92 g of water, 33.16 g of IPA, and 4.94 g of ethylene glycol monobutyl ether were mixed.

(Example 4)

A coating liquid was obtained in the same manner as in Example 2, except that in the preparation of the mother liquor, the blending amount of the 1% by mass aqueous solution of Ex830 was changed to 0.25 g, the blending amount of water was changed to 4.92 g, and in the preparation of the diluent, 0.69 g of water, 34.38 g of IPA, and 4.92 g of ethylene glycol monobutyl ether were mixed.

(Example 5)

A coating liquid was obtained in the same manner as in Example 2, except that 0.50 g of a 1% by mass IPA solution of a zirconium chelate compound, $Zr(AcAc)_4$ (manufactured by Tokyo Chemical Industry Co., Ltd.), was blended instead of the 1% by mass IPA solution of Al-M.

(Example 6)

A coating liquid was obtained in the same manner as in Example 2, except that in the preparation of the diluent, 0.44 g of water, 34.64 g of IPA, and 4.92 g of ethylene glycol monobutyl ether were mixed, and 0.04 g of sodium di-2-ethylhexyl sulfosuccinate (manufactured by Kao Corporation).

(Example 7)

A coating liquid was obtained in the same manner as in Example 2, except that in the preparation of the diluent, 0.44 g of water, 34.92 g of IPA, and 4.92 g of ethylene glycol monobutyl ether were mixed, and 0.25 g of a 10% by mass IPA solution of trisethylhexyl phosphate (manufactured by FUJIFILM Wako Chemical Corporation).

(Example 8)

A coating liquid was obtained in the same manner as in Example 2, except that in the preparation of the mother liquor, 3.33 g of ST-PS-SO (manufactured by Nissan Chemical Corporation, 15 wt% water, pearl necklace-shaped silica) was blended instead of ST-OUP, the blending amount of the 10% by mass IPA solution of A1230 was changed to 0.25 g, and in the preparation of the diluent, 0.69 g of water, 34.36 g of IPA, and 4.92 g of ethylene glycol monobutyl ether were mixed.

(Example 9)

A coating liquid was obtained in the same manner as in Example 2, except that 3.33 g of ST-PS-SO (manufactured by Nissan Chemical Corporation, 15 wt% water, pearl necklace-shaped silica) was blended instead of ST-OUP.

(Example 10)

A coating liquid was obtained in the same manner as in Example 9, except that 0.50 g of a 1% by mass aqueous solution of DENACOL EX-841 (manufactured by Nagase ChemteX Corporation) was blended instead of the 1% by mass aqueous solution of DENACOL EX-830.

(Example 11)

A coating liquid was obtained in the same manner as in Example 9, except that 0.50 g of a 1% by mass aqueous solution of DENACOL EX-861 (manufactured by Nagase ChemteX Corporation) was blended instead of the 1% by mass aqueous solution of DENACOL EX-830.

(Example 12)

A coating liquid was obtained in the same manner as in Example 2, except that in the preparation of the mother liquor, 0.50 g of a 10% by mass IPA solution of X-12-641 (manufactured by Shin-Etsu Chemical Co., Ltd.) was blended instead of the 10% by mass IPA solution of A1230.

(Comparative Example 1)

3.33 g of a water-dispersed silica sol, ST-OUP (manufactured by Nissan Chemical Corporation, 15% by mass), 0.50 g of a 10% by mass aqueous solution of acetic acid, and 0.50 g of a 1% by mass aqueous solution of an epoxy compound, DENACOL EX-830 (manufactured by Nagase ChemteX Corporation), were mixed, and the mixture was stirred for one hour. Subsequently, 5.17 g of water and 0.50 g of a 1% by mass IPA solution of a metal chelate, Al-M (manufactured by Kawaken Fine Chemicals Co., Ltd.), were further added thereto and mixed, and the mixture was stirred for one hour to obtain a mother liquor.

0.45 g of water, 34.61 g of IPA, and 4.94 g of ethylene glycol monobutyl ether were mixed to prepare a diluent.

This diluent and the mother liquor were mixed to obtain a coating liquid.

(Comparative Example 2)

3.33 g of a water-dispersed silica sol, ST-OUP (manufactured by Nissan Chemical Corporation, 15% by mass), 0.50 g of a 10% by mass aqueous solution of acetic acid, 0.25 g of a 10% by mass IPA solution of methyltrimethoxysilane, KBM-13 (manufactured by Shin-Etsu Chemical Co., Ltd.), and 0.50 g of a 1% by mass aqueous solution of an epoxy compound, DENACOL EX-830 (manufactured by Nagase ChemteX Corporation), were mixed, and the mixture was stirred for one hour. Subsequently, 4.92 g of water and 0.50 g of a 1% by mass IPA solution of a metal chelate, Al-M (manufactured by Kawaken Fine Chemicals Co., Ltd.), were further added thereto and mixed, and the mixture was stirred for one hour to obtain a mother liquor.

0.69 g of water, 34.36 g of IPA, and 4.94 g of ethylene glycol monobutyl ether were mixed to prepare a diluent. This diluent and the mother liquor were mixed to obtain a coating liquid.

(Comparative Example 3)

A coating liquid was obtained in the same manner as in Comparative Example 2, except that 0.25 g of a 10% by mass IPA solution of hexyltriethoxysilane, KBM-3063 (manufactured by Shin-Etsu Chemical Co., Ltd.), was blended instead of the 10% by mass IPA solution of KBM-13.

(Comparative Example 4)

A coating liquid was obtained in the same manner as in Comparative Example 2, except that 0.25 g of a 10% by mass IPA solution of 3-aminopropyltrimethoxysilane, KBM-903 (manufactured by Shin-Etsu Chemical Co., Ltd.), was blended instead of the 10% by mass IPA solution of KBM-13.

(Comparative Example 5)

A coating liquid was obtained in the same manner as in Comparative Example 2, except that 0.25 g of a 10% by mass IPA solution of phenyltrimethoxysilane, KBM-103 (manufactured by Shin-Etsu Chemical Co., Ltd.), was blended instead of the 10% by mass IPA solution of KBM-13.

(Comparative Example 6)

A coating liquid was obtained in the same manner as in Comparative Example 2, except that 0.25 g of a 10% by mass IPA solution of N-phenyl-3-aminopropyltrimethoxysilane, KBM-573 (manufactured by Shin-Etsu Chemical Co., Ltd.), was blended instead of the 10% by mass IPA solution of KBM-13.

(Comparative Example 7)

A coating liquid was obtained in the same manner as in Comparative Example 2, except that 0.25 g of a 10% by mass IPA solution of 3-ureidopropyltrialkoxysilane, KBM-585A (manufactured by Shin-Etsu Chemical Co., Ltd.), was blended instead of the 10% by mass IPA solution of KBM-13.

<Antifogging treatment on polycarbonate base material>

A substrate made of polycarbonate and having a size of 10 cm on each side × 2 mm in thickness was washed with isopropyl alcohol. A coating liquid obtained in each example was applied on the substrate by using an applicator and was heated at 110°C for 30 minutes to obtain a polycarbonate substrate with an antifogging film having a thickness of 500 nm to 2 μm as a sample material.

<Evaluation>

The sample materials were subjected to the following evaluations. The results are shown in Tables 1 to 3.

[Antifogging properties]

(Breath test: Initial stage)

In a laboratory where the room temperature was 25°C, breath was blown on an antifogging film from a position 5 cm away from the antifogging film, and the presence or absence of fog was visually observed. A case where fog did not occur was rated as "A", and a case where fog occurred was rated as "B".

(Breath test: After fogging test)

The sample materials were subjected to the following fogging test.
Fogging test: A testing apparatus 20 shown in FIG. 2 was assembled according to the specifications of ISO 6452:2007, and the test was carried out by the following procedure.

(i) A cut rubber cover 12 (size: one piece having a size of 1 cm × 1 cm × 2 mm) is placed on the bottom of a test tube 11, the opening part of the test tube 11 is covered with a sample material 13 (the surface provided with an antifogging film is disposed so as to face the opening part side), and the sample material 13 is fixed with a tape 14 so that the sample material does not come off.
(ii) The test tube 11 is disposed in an oil bath 15 as a heat medium such that the rubber cover 12 is below the oil surface, and the test tube 11 is heated at 180°C for 2 hours.
(iii) After heating, the oil bath is left to stand until the temperature reaches normal temperature, and the sample material 13 is removed.

The sample material after the test was subjected to a breath test in the same manner as described above, and fog was evaluated.

[Table 1]

| Item | | Unit | Example 1 | Example 2 | Example 3 | Example 4 | Example 5 | Example 6 | Example 7 |
|---|---|---|---|---|---|---|---|---|---|
| Composition | Silica | - | ST-OUP | ST-OUP | ST-OUP | ST-OUP | ST-OUP | ST-OUP | ST-OUP |
| | | Parts by mass | 100 | 100 | 100 | 100 | 100 | 100 | 100 |
| | Silane coupling agent | - | A1230 | A1230 | A1230 | A1230 | A1230 | A1230 | A1230 |
| | | Parts by mass | 10 | 10 | 30 | 10 | 10 | 10 | 10 |
| | Binder compound | - | EX-830 | EX-830 | EX-830 | EX-830 | EX-830 | EX-830 | EX-830 |
| | | Parts by mass | 1 | 1 | 1 | 5 | 1 | 1 | 1 |
| | Metal chelate | - | - | Al-M | Al-M | Al-M | $Zr(acac)_4$ | Al-M | Al-M |
| | | Parts by mass | - | 1 | 1 | 1 | 1 | 1 | 1 |
| | Additive | - | - | - | - | - | - | Sodium di-2-ethylhexyl sulfosuccinate | Trisethylhexyl phosphate |
| | | Parts by mass | - | - | - | - | - | 5 | 5 |
| Antifogging properties | Breath (initial stage) | | A | A | A | A | A | A | A |
| | Breath (after fogging test) | | A | A | A | A | A | A | A |

[Table 2]

| Item | | Unit | Example 8 | Example 9 | Example 10 | Example 11 | Example 12 |
|---|---|---|---|---|---|---|---|
| Composition | Silica | - | ST-PS-SO | ST-PS-SO | ST-PS-SO | ST-PS-SO | ST-OUP |
| | | Parts by mass | 100 | 100 | 100 | 100 | 100 |
| | Silane coupling agent | - | A1230 | A1230 | A1230 | A1230 | X-12-641 |
| | | Parts by mass | 5 | 10 | 10 | 10 | 10 |
| | Binder compound | - | EX-830 | EX-830 | EX-841 | EX-861 | EX-830 |
| | | Parts by mass | 1 | 1 | 1 | 1 | 1 |
| | Metal chelate | - | Al-M | Al-M | Al-M | Al-M | Al-M |
| | | Parts by mass | 1 | 1 | 1 | 1 | 1 |
| | Additive | - | - | - | - | - | - |
| | | Parts by mass | - | - | - | - | - |
| Antifogging properties | Breath (initial stage) | | A | A | A | A | A |
| | Breath (after fogging test) | | A | A | A | A | A |

[Table 3]

| Item | | | Unit | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|
| Composition | Silica | | - | ST-OUP | ST-OUP | ST-OUP | ST-OUP | ST-OUP | ST-OUP | ST-OUP |
| | | | Parts by mass | 100 | 100 | 100 | 100 | 100 | 100 | 100 |
| | Silane coupling agent | | - | - | KBM-13 | KBM-3063 | KBM-903 | KBM-103 | KBM-573 | KBM-585A |
| | | | Parts by mass | - | 5 | 5 | 5 | 5 | 5 | 5 |
| | Binder compound | | - | EX-830 | EX-830 | EX-830 | EX-830 | EX-830 | EX-830 | EX-830 |
| | | | Parts by mass | 1 | 1 | 1 | 1 | 1 | 1 | 1 |
| | Metal chelate | | - | Al-M | Al-M | Al-M | Al-M | Al-M | Al-M | Al-M |
| | | | Parts by mass | 1 | 1 | 1 | 1 | 1 | 1 | 1 |
| | Additive | | - | - | - | - | - | - | - | - |
| | | | Parts by mass | - | - | - | - | - | - | - |
| Antifogging properties | Breath (initial stage) | | | A | A | A | A | A | A | A |
| | Breath (after fogging test) | | | B | B | B | B | B | B | B |

## Reference Signs List

1: lens, 2: antifogging film, 3: lamp housing, 4: light source, 5: reflector, S: lamp chamber, 11: test tube, 12: rubber cover, 13: sample material, 14: tape, 15: oil bath.

## Claims

1. An antifogging agent comprising silica particles, a binder compound, a silane coupling agent having a polyether group, and a liquid medium.

2. The antifogging agent according to claim 1, wherein the binder compound is an epoxy compound.

3. The antifogging agent according to claim 1 or 2, wherein a content of the silane coupling agent having a polyether group is 10 to 5000 parts by mass with respect to 100 parts by mass of the binder compound.

4. The antifogging agent according to any one of claims 1 to 3, wherein a content of the binder compound is 0.1 to 1000 parts by mass with respect to 100 parts by mass of the silica particles.

5. The antifogging agent according to any one of claims 1 to 4, further comprising a metal chelate.

6. The antifogging agent according to any one of claims 1 to 5, further comprising at least one additive selected from the group consisting of an organic phosphoric acid ester having a branched structure and an organic sulfonic acid salt having a branched structure.

7. The antifogging agent according to claim 6, wherein the antifogging agent includes a sulfosuccinic acid diester salt and/or an alkylbenzenesulfonic acid salt as the additive.

8. The antifogging agent according to claim 6, wherein the antifogging agent includes trisethylhexyl phosphate as the additive.

9. A hydrophilizing agent comprising silica particles, a binder compound, a silane coupling agent having a polyether group, and a liquid medium.

10. The hydrophilizing agent according to claim 9, wherein the binder compound is an epoxy compound.

11. The hydrophilizing agent according to claim 9 or 10, wherein a content of the silane coupling agent having a polyether group is 10 to 5000 parts by mass with respect to 100 parts by mass of the binder compound.

12. The hydrophilizing agent according to any one of claims 9 to 11, wherein a content of the binder compound is 0.1 to 1000 parts by mass with respect to 100 parts by mass of the silica particles.

13. The hydrophilizing agent according to any one of claims 9 to 12, further comprising a metal chelate.

14. The hydrophilizing agent according to any one of claims 9 to 13, further comprising at least one additive selected from the group consisting of an organic phosphoric acid ester having a branched structure and an organic sulfonic acid salt having a branched structure.

15. The hydrophilizing agent according to claim 14, wherein the hydrophilizing agent includes a sulfosuccinic acid diester salt and/or an alkylbenzenesulfonic acid salt as the additive.

16. The hydrophilizing agent according to claim 14, wherein the hydrophilizing agent includes trisethylhexyl phosphate as the additive.

17. An antifogging method for a vehicular lamp structure, comprising:

    a step of applying the antifogging agent according to any one of claims 1 to 8 on an inner surface of a lens included in a vehicular lamp structure to form a coating film; and

a step of drying the coating film.

18. A vehicular lamp structure comprising an antifogging film formed from the antifogging agent according to any one of claims 1 to 8 on an inner surface of a lens.

*Fig.1*

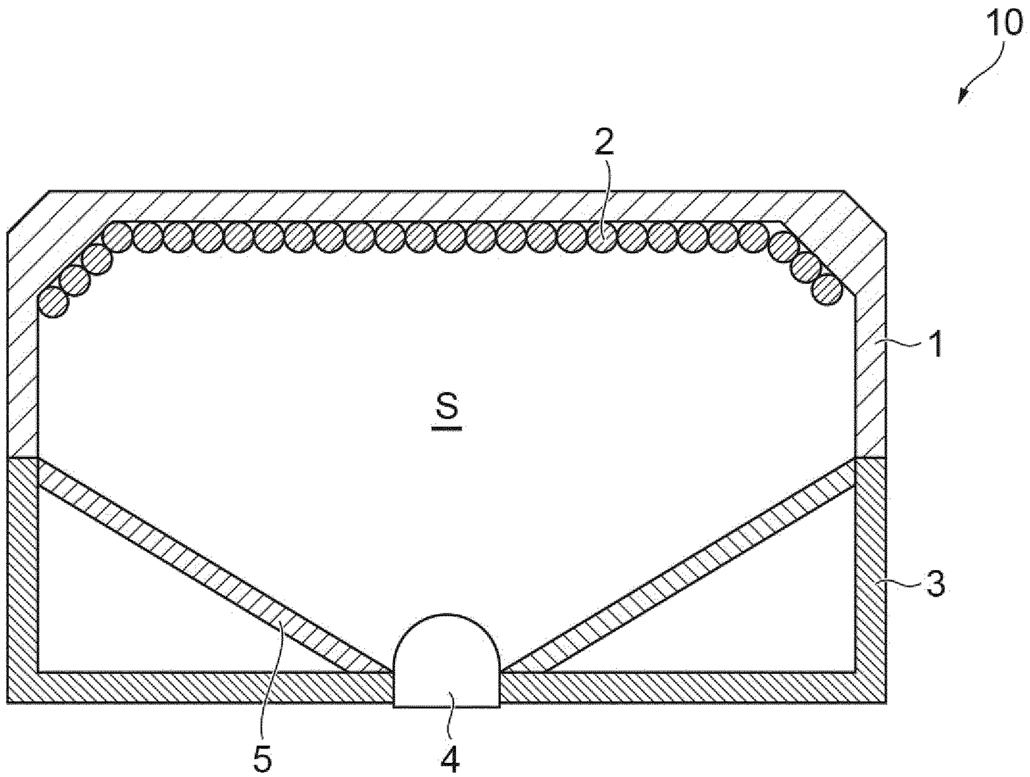

Fig.2

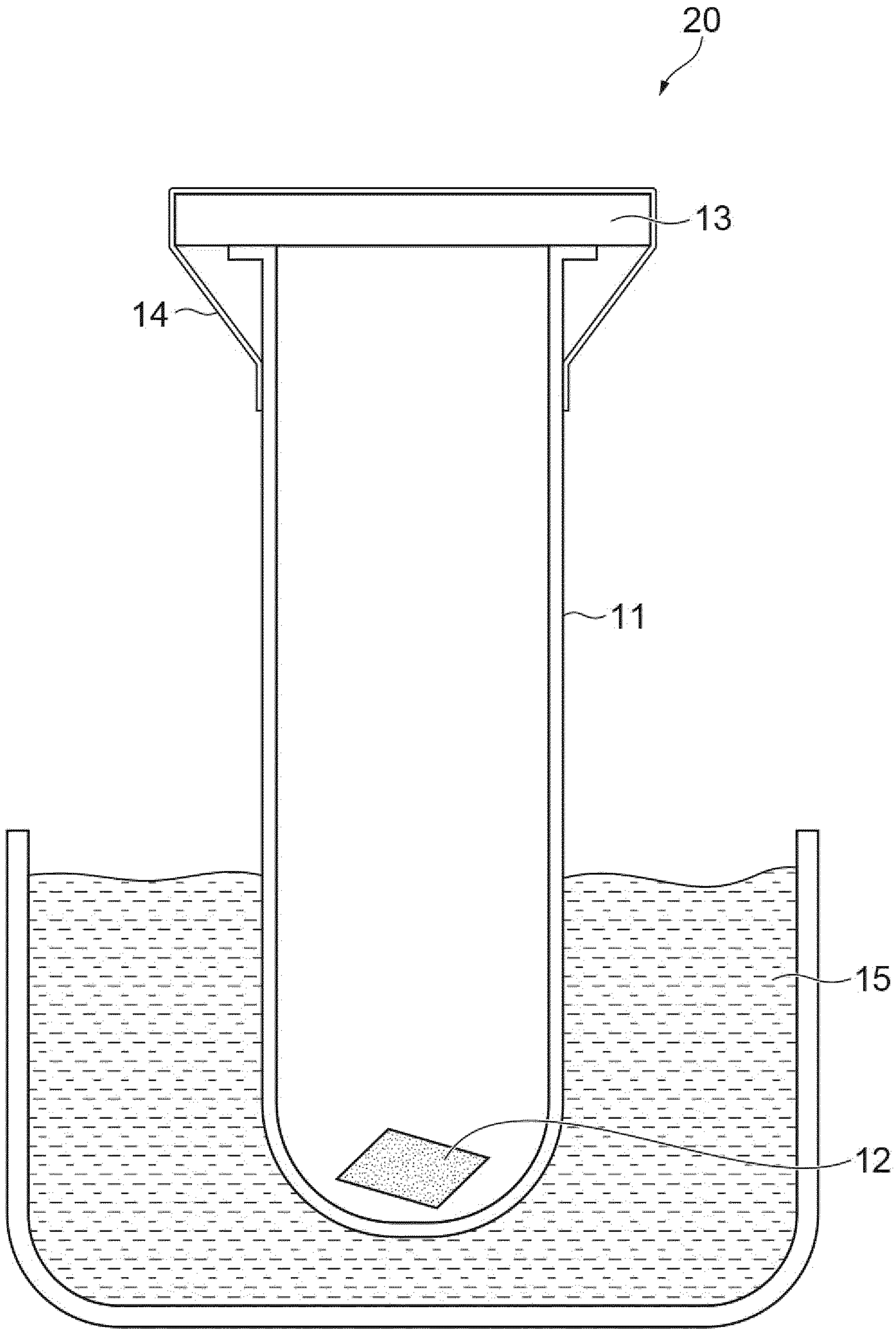

**INTERNATIONAL SEARCH REPORT**

International application No.
**PCT/JP2021/042596**

**A. CLASSIFICATION OF SUBJECT MATTER**

***C09D 163/00***(2006.01)i; ***C09D 201/00***(2006.01)i; ***C09K 3/00***(2006.01)i; ***C09K 3/18***(2006.01)i; ***C09D 7/61***(2018.01)i; ***C09D 7/63***(2018.01)i; ***G02B 1/10***(2015.01)i
FI: C09K3/18; C09D7/61; C09D201/00; C09D7/63; C09D163/00; G02B1/10; C09K3/00 R

According to International Patent Classification (IPC) or to both national classification and IPC

**B. FIELDS SEARCHED**

Minimum documentation searched (classification system followed by classification symbols)

C09D163/00; C09D201/00; C09K3/00; C09K3/18; G02B1/10; C09D7/61; C09D7/63

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2018-44052 A (TOYOPOLYMER CO., LTD.) 22 March 2018 (2018-03-22)<br>claims 1-6, paragraph [0052], examples 1-29 | 1, 4, 9, 12<br>2-3, 5-8, 10-11, 13-18 |
| X<br>Y | JP 10-510576 A (MINNESOTA MINING & MFG CO.) 13 October 1998 (1998-10-13)<br>claims 1-12, p. 10, lines 5-8, p. 40, lines 13-26, example 13 | 1, 3-4, 9, 11-12<br>2, 5-8, 10, 13-18 |
| Y<br>A | JP 10-25468 A (MITSUI TOATSU CHEM INC.) 27 January 1998 (1998-01-27)<br>claim 3, examples 1-4, 7-12 | 2-3, 5-8, 10-11, 13-18<br>1, 4, 9, 12 |
| Y<br>A | WO 2009/044912 A1 (HARIMA CHEMICALS, INC.) 09 April 2009 (2009-04-09)<br>paragraph [0057] | 3, 5-8, 11, 13-18<br>1-2, 4, 9-10, 12 |
| A | JP 2020-105467 A (FUJIFILM CORP.) 09 July 2020 (2020-07-09)<br>claims, examples | 1-18 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **31 January 2022** | **08 February 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (January 2015)

**INTERNATIONAL SEARCH REPORT**
**Information on patent family members**

International application No.
**PCT/JP2021/042596**

| Patent document cited in search report | Publication date (day/month/year) | Patent family member(s) | Publication date (day/month/year) |
|---|---|---|---|
| JP 2018-44052 A | 22 March 2018 | (Family: none) | |
| JP 10-510576 A | 13 October 1998 | US 5997621 A<br>claims 1-12, column 1, lines 22-28, column 18, lines 11-28, example 13<br>WO 1996/018691 A2<br>EP 797630 A2<br>AU 4372396 A<br>MX 9703929 A<br>AU 711689 B<br>CA 2204515 A1<br>ES 2153908 T3<br>ZA 9510378 B | |
| JP 10-25468 A | 27 January 1998 | (Family: none) | |
| WO 2009/044912 A1 | 09 April 2009 | KR 10-2010-0067647 A<br>CN 101809101 A | |
| JP 2020-105467 A | 09 July 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2016027134 A